Europäisches Patentamt

(19) European Patent Office

Office européen des brevets

(11) Publication number: **0 170 639**
**B1**

(12) **EUROPEAN PATENT SPECIFICATION**

(45) Date of publication of patent specification: **08.03.89**

(21) Application number: **85850198.4**

(22) Date of filing: **05.06.85**

(51) Int. Cl.⁴: **B 07 B 13/00, B 07 B 4/08, B 01 F 11/00**

(54) **Particle displacement.**

(30) Priority: **03.07.84 SE 8403524**

(43) Date of publication of application:
**05.02.86 Bulletin 86/06**

(45) Publication of the grant of the patent:
**08.03.89 Bulletin 89/10**

(84) Designated Contracting States:
**AT BE CH DE FR GB IT LI LU NL**

(56) References cited:
**WO-A-84/01527**
**DE-A-3 301 978**
**DE-C- 860 031**
**DE-C- 881 031**
**US-A-3 745 060**
**US-A-4 252 844**

**PATENT ABSTRACTS OF JAPAN, unexamined applications, C field, vol. 8, no. 30, February 8, 1984, THE PATENT OFFICE JAPANESE GOVERNMENT, p. 125 C 209**

(73) Proprietor: **ROCKWOOL AKTIEBOLAGET**
**Fack 615**
**S-541 86 Skövde (SE)**

(72) Inventor: **Ankersson, Bill**
**Rödhakevägen 12**
**S-541 56 Skövde (SE)**
Inventor: **Lindqvist, Arne**
**Stockvägen 189**
**S-541 62 Skövde (SE)**

(74) Representative: **Avellan-Hultman, Olle**
**Avellan-Hultman Patentbyra AB P.O. Box 5366**
**S-102 46 Stockholm 5 (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

It is already known in the art to provide a method and apparatus for displacing particles in a loose layer of material using the effect of gravity force and oscillation in the acoustic range (see, for example, WO—A—84/01527 and DE—C—860031).

The present invention relates to a method and an apparatus for displacement of particles on and in a layer of mineral wool. By displacement of particles is meant either removal of not wanted particles from the layer of mineral wool, or introduction and distribution of other particles of the layer of mineral wool, or both alternatives at the same time.

When manufacturing mineral wool, especially so called stone wool and slag wool, particles of non-fibrated material, so called shots or pearls, are formed concurrently with the fibres. Such particles may be more or less ball formed and provide a basically non-wanted part of the material and they make the mineral wool heavy and may, when becoming released as the mineral wool is mounted on the intended place, drop out of the mineral wool and cause skin irritation and littering problems. Further they often give the mineral wool a dark colour, what is considered disadvantageous from the esthetical viewpoint.

In order to reduce or eliminate the existence of said non-wanted particles it has been an ambition to improve both the fibrating process and the subsequent process of separating the fibres from the non-fibrated material. In this respect great success has been achieved. It has not, however, been possible to eliminate all of said particles. Attempts also have made to remove the said particles after the mineral wool has been collected to a layer. Among the suggested ways of removing the particles may be mentioned the method of sucking the particles away by means of nozzles located adjacent, possibly very close to the wool layer. In order to prevent the particles from becoming released attempts also have been made to bind the particles harder to the rest of the mineral wool by spraying an oil or a surface covering onto the mineral wool.

Another problem which has since long been actual in the mineral wool industry is the need of adding particles. In this respect it is question of particles giving the mineral wool new or improved qualities. Such particles may be a binder in dry form but they may also be particles giving the mineral wool a better ability of preventing infra red radiation. In both cases there is a question of improving the qualities and the isolation property.

It may, however, also be of interest to give the mineral wool new qualities. An addition of the above mentioned type of active carbon in fine grain form may give the mineral wool an adsorption ability for gases that the mineral wool otherwise does not possess. Such an absorption ability might be of value in some connections, for instance when the mineral wool is used as a filter.

There has, however, been great difficulties in making such supplementary particles penetrate in the mineral wool. The fibre structure of the mineral wool with very short mutual fibre distances give the wool good filtrating properties and this may of course be desirable in some cases. The said structure, however, prevents the powder particles from penetrating into the mineral wool. Therefore attempts have been made to supply the powder in connection to the fibrating process, so that the powder and the particles deposite concurrently to a powder-enriched mineral wool layer. A disadvantage in such a method is that it is difficult to supply the powder so that the powder content is relatively evenly distributed in the mineral wool. Further it often has been difficult to avoid losses of powder, and this may be an important disadvantage since the powder is often a qualitified type of material.

Now it has surprsingly shown that both the above mentioned problems, which may seem different from each other, can be solved by a single new method. The invention lies in said method which is defined in claim 1 of the appended claims. According to the invention a layer of mineral wool is subjected to a constant force acting at an angle to the plane of the mineral wool layer. The force may be the gravity force or it may be the force from a flow of air which is brought to pass the mineral wool layer. Concurrently with said constant force the mineral wool layer is subjected to oscillation energy within the acoustic area.

The phenomena thereby occuring is very difficult to study in detail. It is thought that the acoustic energy give the particles and/or the mineral wool fibres such mutual movements that the particles by means of the constant force can move in relation to the fibres to a degree which is much higher than the previously observed degree. The possibility of the particles to move in relation to the fibre structure now can be utilized so that particles of the fibre structure are thereby caused to move out of the fibre structure. It thereby shows that the invention has a limited effect on large particles but a sufficiently great effect on particles lying close to the surface of the mineral wool layer. Therefore the method of the invention makes it possible to remove the greatest part of the particles from the mineral wool, which particles would otherwise shake out when handling the mineral wool, and which particles might cause skin irritation and which would give the mineral wool a dark colour.

It is also possible to cause a powder which is spread over the mineral wool layer to move into the mineral wool layer.

It is quite possible to make use of both phenomena at the same time.

As mentioned above it is possible to have the gravity force act as the constant force. Said force alternatively can be executed by a flow of air which is created for instance in that the mineral wool layer is moved over a suction box in which there is a sub-pressure. It has, however, shown that the combination of said two steps gives a constant force which can be dimensioned very freely. By utilizing the gravity for having the powder enter the mineral wool and having the particles leave the mineral wool respectively the process is also simplified in other respects. The particles leaving the mineral wool are then removed from the mineral wool layer and it is easy to initially distribute a powder over the surface of the mineral wool, which powder by the method is brought to penetrate into the mineral wool layer.

As evident, the method as defined in the claims envisages treatment of the mineral wool layer on both sides whereby, for example, particles from both surface layers of the mineral wool are removed. By this method the powder formed material can be distributed more evenly in the mineral wool layer than would otherwise have been possible.

The frequency and the intensity that the oscillation energy should have to give the best effect is to a high degree depending on the tightness, the orientation and the diameter of the fibrous material and the shape, size and density of the powder and the separate shot particles respectively. To some extent also the forces acting between the particles, for instance the adhesion has a role. It has, however, been observed that a substantially better effect can sometimes be obtained if frequencies of two distinctly different intervals are used at the same time. It has shown that as a rule infrasound or infralight of very low frequency are most effective. In most cases a frequency of between 10 and 200 Hz is suitable, and in connection to mineral wool a frequency of between 20 and 60 Hz is especially preferable.

The intensity also is of great importance. At a sound strength below a certain level hardly any effects can be observed. Effects above 70 dB are useful provided that the frequency or the frequencies respectively are correctly chosen. At sound strengths over 130 dB the health view points are of determining importance for the practical use of the method. There is also a risk that the separate fibres get such large movements that the entire fibre structure collapses.

To summarize, the invention relates to a method and an apparatus of the above mentioned type in which the mineral wool layer including the particles are subjected to oscillation energy within the acoustic area and concurrently therewith to a constant force directed at an angle, preferably blunt angle to the plane of the mineral wool layer.

The invention now will be described more closely in connection with the accompanying drawings. It is, however, to be understood that the embodiments of the invention described and shown in the drawings are only of illustrating type and that many different modifications may be presented within the scope of the appended claims.

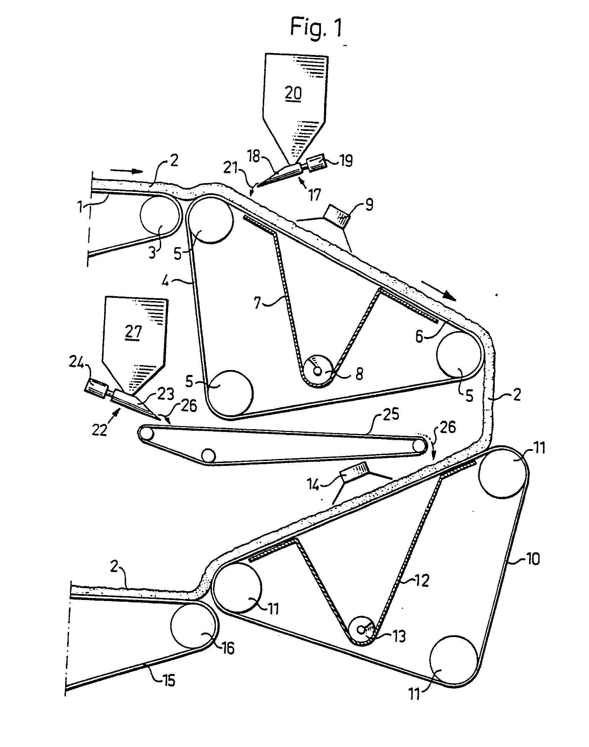

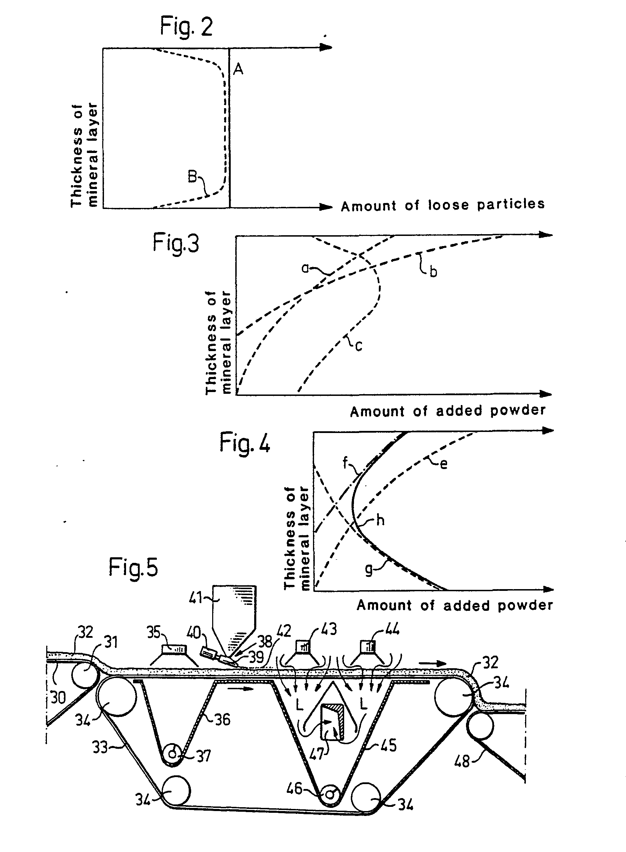

In the drawings figure 1 diagrammatically shows a vertical cross section through an apparatus for executing the method according to the invention. Figure 2 is a diagram illustrating how the distribution of present particles of a mineral wool layer is changed by the method according to the invention. Figure 3 is a similar diagram showing the distribution of a powder which is supplied to one surface of the mineral wool layer, and figure 2 correspondingly shows the situation when the powder is supplied to both sides of the mineral wool layer. Figure 5 shows apparatus modified as compared with that of figure 1 and included to assist in understanding modifications of the preferred embodiment.

In the apparatus shown in figure 1 a mineral wool layer 2 is fed on a conveyor 1. The conveyor extends over a turning roll 3 thereby delivering the mineral wool layer 2 to a second conveyor 4 extending over rolls 5. The upper part 6 of said second conveyor 4 is sloping slightly downwards and provides a plane against which a constant force, in this case the gravity foce, is acting on the mineral wool layer. The force is meeting the surface of the mineral wool layer under a blunt angle. Below the said upper part 6 of the conveyor there is a funnel formed collection means 7 at the bottom of which there is a worm 8. Above the conveyor a sound emitting means 9 is mounted. The conveyor 4 is perforated and may for instance be a metal wire net. When the mineral wool layer 2 passes the sound emitting means 9 and is subjected to acoustic energy of a suitable frequency and strength loose particles from the mineral wool layer, especially from the lower part thereof are released and drop through the conveyor and down to the collection means 7 and are removed therefrom by the worm 8. After this treatment the mineral wool layer 2 leaves the second coneyor 4 and is transferred to a corresponding third conveyor 10 extending over rolls 11. Also said third conveyor 10 is perforated. Underneath the upper sloping part of the third conveyor 10 there is a collection means 12 having a worm 13, and above the conveyor 10 there is a sound emitting means 14. When the mineral wool layer 2 passes under the sound emitting means 14 particles likewise become loosened from the mineral wool layer and drop down into the collection means 12. The said particles mainly come from the former upper part, now the lower part of the mineral wool layer.

After the treatment on the third conveyor 10 the layer 2 is transmitted to a fourth conveyor 15 extending over a turning roll 16.

Above the first conveyor and in advance of the sound emitting means 9 there is a vibration feeder 17 comprising a flute 18 and a vibrator 19. The vibration feeder 17 in turn is connected to and fed from a silo 20 containing a fine grain powder. The powder may be a binder that can be hardened, for isntance a powder of thermosetting resin which after a further treatment like melting and solidifying binds the fibres of the mineral wool layer together. The powder alternatively may be particles of substances which adds qualities to or changes the properties of the mineral wool layer, for instance the opacity thereof. Or especially the properties as concerns heat radiation, the absorption property or the fertilizing properties. By the action of the vibration feeder 17 a flow 21 of the fine grain powder will be distributed over the mineral wool layer 2. Under the action of gravity and the sound energy from the sound emitting means 9 the powder penetrates into the mineral wool layer 2.

Likewise there is a vibration feeder 22 comprising a flute 23 and a vibrator 24 above the third conveyor 10. By means of a conveyor 25 the second vibration feeder 22, feeds a fine grain powder 26 from a silo 27 to the upper surface of the mineral wool layer 2 after said layer has been turned when being transferred from the second conveyor 4 to the third conveyor 10. Under the action of the sound emitting means 14 the powder will penetrate into the mineral wool layer.

Figure 2 is a diagram showing the effect of the invention when the mineral wool layer subjected to treatment contains loose particles. The vertical axis of the diagram represents the thickness of the mineral wool layer and the lower part of the diagram represents the part of the mineral wool layer which is facing down at the beginning of the treatment. The horizontal axis represents the amount of loose particles and the line A represents the original state. At the original state the amount of loose particles consequently are the same throughout the entire mineral wool layer. This is not always the case, but for the sake of simplicity this presumption has been made in the present case. The line B represents the amount of loose particles after the mineral wool layer has been subjected to a double side treatment according to the invention. As evident from the diagram the reduction in amount of loose particles is substantial only at the two outermost parts of the mineral wool layer. The loose particles, so called shots or pearls, which are normally in the mineral wool layer are generally so large, the typical diameter is 0.1 mm, that they cannot be moved any substantial distance through the mineral wool structure without becoming definitively caught in the fibre grid. Figure 3 is a similar daigram showing the amount of added powder, for instance added binder. If the binder is chosen with a sufficient fine grain the line "a" may represent the amount after the binder has been supplied to the upper surface of the mineral wool layer and thereafter has been entered to the mineral wool layer by treatment according to the invention. The line "a" represents an optimum position in that the powder reaches the surface of the mineral wool layer at the same time as the powder from the upper surface is just starting to sink. The line "b" represents an earlier stage in which the amount of powder at the upper surface of the mineral wool layer is still very high and no powder has yet reached the lower surface thereof. The line "c" on the contrary represents a late stage characterized in that both the powder in the upper surface of the mineral wool layer has started becoming reduced depending on a continued transportation of powder into the mineral wool layer, and in that the amount of powder at the lower surface of the mineral wool layer is substantial and indicates the conditions for a fairly well executed double side application powder and treatment according to the invention. Later, after the mineral wool layer has been turned and is subjected to a renewed treatment the powder which has already been introduced into the mineral wool layer will move in the opposite direction, and the amount of said powder is represented by the line "f". At the same time additional powder has been supplied to the opposite surface in the diagram the lower side, and said powder has been introduced in the mineral wool layer. The amount of said powder is represented by the line "g". The line "h" shows the sum of the amounts represented by the lines "f" and "g".

By choosing the parameters, for instance the treating times, the grain size of the powder, the thickness of the layer etc, the line "h" may be of different character.

Figure 5 shows an apparatus in which the removal of free particles is made separately from the transportation of powder into the mineral wool layer. The figure shows a first conveyor 30 extending over a roll 31. A layer 32 of mineral wool is supported on the conveyor 30. By means of the conveyor 30 the mineral wool layer 32 is transferred to a second conveyor 33 extending over rolls 34. The conveyor 33 consists of a metal net. Close to the receiving end of the conveyor 33 a sound emitting means 35 is mounted over the conveyor and on the opposite end thereto underneath the conveyor there is a collection means 36 at the bottom of which a worm 37 is mounted. By the action of the sound emitting means 35 and the gravity force a part of the free particles of the mineral wool layer are brought to leave same and drop down through the conveyor 33 and into the collection means 36 from the bottom of which the particles are removed by the worm 37. In the down stream direction of the sound emitting means 35 a vibration feeder 38 is mounted over the conveyor 33 and the mineral wool layer 32. The feeder 38 comprises a flute 39 and a vibrator 40. A silo 41 containing fine grain powder is mounted in communication with the flute 39. When the conveyor 33 is moving and the vibration feeder 38 is operating a layer of a powder 42 is spread over the mineral wool layer 32. Under the action of the gravity force and sound emitting means 43 and 44 the powder 42 now enters the mineral wool layer 32. A part of the powder may pierce the mineral wool layer 32 and leave at the bottom side thereof, whereby the powder passes through the meshes of the conveyor 33 and drops down in a collection means 45 from which it is removed by a worm 46. The action of the gravity force is supported by the action of an air flow which is introduced by a fan which is not shown in the drawings. The fan is connected to an opening 47 of the collection means 45 and it causes air flow from the ambient through the mineral wool layer 32 and the conveyor 33. The air leaving through the opening 47 may contain powder, and this powder is filtered away by a filter which is not shown in the drawings and which is preferably mounted between the collection means and the fan. The mineral wool layer 32 from which free particles have now been removed and which has been supplied with a powder leaves the conveyor 33 at the outlet end thereof and is laid down on a third conveyor 48.

ROCKWOOL AKTIEBOLAGET, "Displacement of particles"

List of reference numerals

    1 conveyor, 1:st
    2 mineral wool layer
    3 turning roll
    4 conveyor, 2:nd
    5 rolls
    6 upper part (of 4)
    7 collection means
    8 worm
    9 sound emitting means
    10 conveyor, 3rd
    11 rolls
    12 collection means
    13 worm
    14 sound emitting means
    15 conveyor, 4:th
    16 turning roll
    17 vibration feeder
    18 flute
    19 vibrator
    20 silo
    21 flow
    22 vibration feeder
    23 flute
    24 vibrator
    25 conveyor
    26 powder
    27 silo
    30 conveyor, 1:st
    31 roll
    32 mineral wool layer
    33 conveyor, 2:nd
    34 rolls
    35 sound emitting means
    36 collection means
    37 worm
    38 vibration feeder
    39 flute
    40 vibrator
    41 silo
    42 layer of powder
    43 sound emitting means
    44 sound emitting means
    45 collection means
    46 worm
    47 opening (of 45)
    48 conveyor, 3:rd

## Claims

1. Method of displacing particles on or in a layer (2) of mineral wool in relation to said layer, whereby the mineral wool layer (2) comprising said particles is subjected both to oscillation energy (by 9, 14) within the acoustic area and concurrently therewith to a force directed at an angle, preferably a blunt angle, to the plane of the layer, characterized in that the mineral wool layer (2) is treated double-sided by being subjected to the constant force and the oscillating energy acting on the layer first in one direction and thereafter in the opposite direction.

2. Method according to claim 1, characterized in that a constant force is the gravity force.

3. Method according to claim 1, characterized in that the constant force at least partly consists of a flow of air which is moved towards and through the layer (2) of material.

4. Method according to claim 1, 2 or 3, whereby the particles originally are located inside the layer of material, characterized in that the constant force and the oscillation energy are utilized for moving the particles out of the layer (2) of material.

5. Method according to any of claims 1—4, whereby particles are supplied to the surface of the mineral wool layer (2), characterized in that the constant force and the oscillation energy are utilized for moving the particles from said surface to the interior of the layer of material (2).

6. Method according to claim 5, characterized in that the particles consists of a substance, for instance a powder formed synthetic resin, which after further treatment, for instance melting and solidifying, acts as a binder between the fibres of the layer (2) of material.

7. Method according to claim 4 or 5, characterized in that the particles consists of substances which add qualities to the layer (2) of material or changes the qualities thereof, for instance the opacity, especially the opacity for heat radiation, its absorbtion ability and its fertilizing properties.

8. Apparatus for executing the method according to any of the preceding claims for displacing particles on or in a layer (2) of mineral wool in relation to said layer, which apparatus comprises means (4) for feeding the mineral wool layer (2), means (9, 14) for subjecting the mineral wool layer (2) both to a constant force and to oscillation energy within the acoustic area, characterized in that said means (9, 14) for subjecting the mineral wool layer (2) both to the constant force and to oscillation energy within the acoustic area are formed for treating the mineral wool layer double-sided, first in one direction and thereafter in the opposite direction.

9. Apparatus according to claim 8, characterized in that said means for double-sided treatment of the mineral wool layer comprises two sloping conveyors (4, 10) mounted one underneath the other and on which the mineral wool layer (2) is successively treated first from one side, and after having been turned upside down, is thereafter treated from the opposite side.

10. Apparatus according to claim 8 or 9, in which the constant force is the gravity force, characterized in that said gravity force is acting at an angle, preferably a blunt angle as seen in the feeding direction of the mineral wool layer (2), and in that said mineral wool layer is sloping downwards.

11. Apparatus according to claim 8 or 9, characterized in that the constant force acting on the layer of material is a flow of air which is directed to and is allowed to pass through said layer of material (2).

12. Apparatus according to any of claims 8—11, in which the means for subjecting the layer of material to oscillation energy is a sound emitting means (9, 14; 35, 43, 44), characterized that said sound emitting means is mounted above the mineral wool layer (2) on several places along the means (4) for feeding the mineral wool layer.

13. Apparatus according to claim 12, characterized in that a collection means (7, 12; 36, 45) is mounted underneath the mineral wool layer (2) for collecting particles which have been forced out of the mineral wool layer.

14. Apparatus according to claim 13, characterized in that the collection means (45) is connected to a suction means for providing a subpressure in said collection means.

15. Apparatus according to any of claims 8—14, characterized in that it is formed with means (for instance 17—21) for supplying particles to the surface of the mineral wool layer.

16. Apparatus according to claim 15, characterized in that it is formed both for expelling particles present from the mineral wool layer and concurrently therewith for introducing and distribution from outside of other particles in the interior of the mineral wool layer.

17. Apparatus according to claim 16, characterized in that it is formed with means for expelling of particles present in the layer of material in a first stage and thereafter for introducing and distributing other particles in the layer of material in a second stage.

**Patentansprüche**

1. Verfahren zum Verlagern von Partikeln auf oder in einer Schicht (2) aus Mineralwolle relativ zu dieser Schicht, wobei die die Partikel aufweisende Mineralwolle-Schicht (2) sowohl einer Oszillationsenergie (durch 9, 14) im akustischen Bereich als auch gleichzeitig einer in einem Winkel, vorzugsweise in einem stumpfen Winkel zur Ebene der Schicht einwirkenden Kraft unterworfen wird, dadurch gekennzeichnet, daß die Mineralwolle-Schicht (2) beidsitig behandelt wird, indem sie der konstanten Kraft und der Oszillationsenergie, die auf die Schicht einwirken, erst in einer Richtung und sodann in der entgegengesetzten Richtung unterworfen wird.

2. Verfahren nach Anspruch 1, dadurch gekennzeichnet, daß die konstante Kraft die Schwerkraft ist.

3. Verfahren nach Anspurch 1, dadurch gekennzeichnet, daß die konstante Kraft mindestens teilweise von einem Luftstrom erzeugt wird, der gegen und durch die Materialschicht (2) bewegt wird.

4. Verfahren nach einem der Ansprüche 1, 2 oder 3, wobei die Partikel ursprünglich innerhalb der Materialschicht leigen, dadurch gekennzeichnet, daß die konstante Kraft und die Oszillationsenergie dazu dienen, die Partikel aus der Materialschicht (2) herauszubewegen.

5. Verfahren nach einem der Ansprüche 1 bis 4, wobei die Partikel der Oberfläche der Mineralwolle-Schicht (2) zugeführt werden, dadurch gekennzeichnet, daß die konstante Kraft und die Oszillationsenergie dazu dienen, die Partikel von der Oberfläche ins Innere der Materialschicht (2) zu bewegen.

6. Verfahren nach Anspruch 5, dadurch gekennzeichnet, daß die Partikel aus einer Substanz, beispielsweise einem pulverförmigen Kunstharz bestehen, welche nach einer weiteren Behandlung, beispielsweise einem Schmelzen und einer Verfestigung, als Binder zwischen den Fasern der Materialschicht (2) wirkt.

7. Verfahren nach Anspruch 4 oder 5, dadurch gekennzeichnet, daß die Partikel aus Substanzen bestehen, welche der Materialschicht (2) zusätzliche Eigenschaften verleihen oder deren Eigenschaften ändern, beispielsweise die Opazität, insbesondere die Opazität für Wärmestrahlung, ihre Absorptionsfähigkeit und ihre Düngeeigenschaften.

8. Vorrichtung zur Durchführung des Verfahrens nach einem der vorhergehenden Ansprüche zum Verlagern von Partikeln auf oder in einer Schicht (2) aus Mineralwolle relativ zu dieser Schicht, mit Mitteln (4) zum Fördern der Mineralwolle-Schicht und mit Mitteln (9, 14) zum Unterwerfen der Mineralwolle-Schicht (2) sowohl einer konstanten Kraft als auch einer Oszillationsenergie im akustischen Bereich, dadurch gekennzeichnet, daß die Mittel (9, 14) die die Mineralwolle-Schicht (2) sowohl der konstanten Kraft als auch der Oszillationsenergie im akustischen Bereich unterwerfen, so ausgebildet sind, daß sie die Mineralwolle-Schicht beidseitig behandeln, erst in der einen Richtung und sodann in der entgegengesetzten Richtung.

9. Vorrichtung nach Anspruch 8, dadurch gekennzeichnet, daß die Mittel zum beidseitigen Behandeln der Mineralwolle-Schicht zwei geneigte Förderer (4, 10) umfaßt, die einer unter dem anderen angeordnet sind und auf denen die Mineralwolle-Schicht (2) aufeinanderfolgend erst von der einen Seite und sodann, nach ihrem Wenden, wobei die Oberseite nach unten gelangt, von der entgegengesetzten Seite behandelt wird.

10. Vorrichtung nach Anspruch 8 oder 9, wobei die konstante Kraft die Schwerkraft ist, dadurch gekennzeichnet, daß die Schwerkraft in einem Winkel einwirkt, vorzugsweise in einem stumpfen Winkel, gesehen in Förderrichtung der Mineralwolle-Schicht (2), und daß die Mineralwolle-Schicht nach unten geneigt ist.

11. Vorrichtung nach Anspurch 8 oder 9, dadurch gekennzeichnet, daß die auf die Materialschicht einwirkende konstante Kraft von einem Luftstrom erzeugt wird, der gegen die Materialschicht (2) gerichtet ist und durch diese hindurchgehen kann.

12. Vorrichtung nach einem der Ansprüche 8 bis 11, wobei die Mittel, die die Materilschicht einer Oszillationsenergie unterwerfen, als Schallquelleneinrichtung (9, 14; 35, 43, 44) ausgebildet sind, dadurch gekennzeichnet, daß die Schallquelleneinrichtung oberhalb der Mineralwolle-Schicht (2) an mehreren Stellen entlang der Mittel (4) zum Fördern der Mineralwolle-Schicht angeordnet ist.

13. Vorrichtung nach Anspruch 12, dadurch gekennzeichnet, daß eine Sammeleinrichtung (7, 12; 36, 45) unterhalb der Mineralwolle-Schicht (2) angeordnet ist, um diejenigen Partikel zu sammeln, die aus der Mineralwolle-Schicht herausgetrieben worden sind.

14. Vorrichtung nach Anspruch 13, dadurch gekennzeichnet, daß die Sammeleinrichtung (45) an eine Saugeinrichtung angeschlossen ist, um einen Unterdruck in der Sammeleinrichtung zu erzeugen.

15. Vorrichtung nach einem Ansprüche 8 bis 14, dadurch gekennzeichnet, daß Mittel (beispielsweise 17 bis 21 (vorgesehen sind, um Partikel auf die Oberfläche der Mineralwolle-Schicht aufzubringen.

16. Vorrichtung nach Anspurch 15, dadurch gekennzeichnet, daß sie dazu ausgebildet ist, sowohl innerhalb der Mineralwolle-Schicht vorhandene Partikel auszutreiben als auch gleichzeitig damit von außen her andere Partikel in das Innere der Mineralwolle-Schicht einzuführen und dort zu vertilen.

17. Vorrichtung nach Anspruch 16, dadurch gekennzeichnet, daß Mittel vorgesehen sind, die in der Materialschicht vorhandene Partikel in einer ersten Stufe austreiben und anschließend andere Partikel in einer zweiten Stufe in die Materialschicht einführen und dort verteilen.

**Revendications**

1. Procédé pour déplacer des particules sur ou dans une couche (2) de laine minérale par rapport à ladite couche, dans lequel la couche (2) de laine minérale comprenant lesdites particules est soumise à la fois à une énergie oscillatoire (par 9, 14) dans le domaine acoustique et, en même temps, à une force dirigée sous un certain angle, avantageusement un angle obtus, par rapport au plan de la couche, caractérisé en ce que la couche (2) de laine minérale est soumise à un traitement double face en étant soumise à la force constante et à l'énergie oscillatoire agissant sur la couche, d'abord dans une direction, puis dans la direction opposée.

2. Procédé selon la revendication 1, caractérisé en ce que la force constante est la force de la gravité.

3. Procédé selon la revendication 1, caractérisé en ce que la force constante est constituée au moins partiellement d'un courant d'air qui est déplacé vers et à travers la couche (2) de matière.

4. Procédé selon la revendication 1, 2 ou 3, dans lequel les particules sont initialement disposées à l'intérieur de la couche de la matière, caractérisé en ce que la force constante et l'énergie oscillatoire sont utilisées pour faire sortir les particules de la couche (2) de matière.

5. Procédé selon l'une quelconque des revendications 1—4, dans lequel des particules sont appliquées sur la surface de la couche (2) de laine minérale, caractérisé en ce que la force constante et l'énergie oscillatoire sont utilisées pour déplacer les particles de ladite surface vers l'intérieur de la couche de matière (2).

6. Procédé selon la revendication 5, caractérisé en ce que les particules sont constituées d'une substance, par exemple une poudre formée d'une résine synthétique qui, après un autre traitement, par exemple une fusion et une solidifications, se comporte comme un liant entre les fibres de la couche (2) de la maintère.

7. Procédé selon la revendication 4 ou 5, caractérisé en ce que les particules sont constituées de substances qui ajoutent des qualités à la couche (2) de la matière ou changent ses qualités, par exemple l'opacité, en particulier l'opacité pour le rayonnement thermique, son aptitude à l'absorption et ses propriétés fertilisantes.

8. Appareil pour la mise en oeuvre du procédé selon l'une quelconque des revendications précédentes pour déplacer des particules sur ou dans un couche (2) de laine minèrale par rapport à ladite couche, lequel appareil comprend des moyens (4) destinés à faire avancer la couche (2) de laine minérale, des moyens (9, 14) destinés à soumettre la couche (2) de laine minérale à la fois à une force constante et à une énergie oscillatoire comprise dans le domaine acoustique, caractérisé en ce que lesdits moyens (9, 14) destinés à soumettre la couche (2) de laine minérale à la fois à la force constante et à une énergie oscillatoire comprise dans le domaine acoustique sont formés pour soumettre la couche de laine minérale à un traitement double face, d'abord dans une direction, puis dans la direction opposée.

9. Appareil selon la revendication 8, caractérisé en ce que lesdits moyens pour le traitement double face de la couche de laine minérale comprennent deux transporteurs inclinés (4, 10) montés l'un au-dessous de l'autre et sur lesquels la couche (2) de laine minérale est traitée de façon successive, d'abord à partir d'un côté, et après avoir été retournée sur elle-même, elle est ensuite traitée à partir du côté opposé.

10. Appareil selon la revendication 8 ou 9, dans lequel la force constante est la force de la gravité, caractérisé en ce que ladite force de ladite gravité agit sous un angle, de préférence un angle obtus tel que considéré dans la direction d'avance de la couche (2) de laine minérale, et en ce que ladite couche de laine minérale est inclinée vers le bas.

11. Appareil selon la revendication 8 ou 9, caractérisé en ce que la force constante agissant sur la couche de matière est un courant d'air qui est dirigé vers et qui peut passer à travers ladite couche de matière (2).

12. Appareil selon l'un quelconque des revendications 8—11, dans lequel les moyens destinés à soumettre la couche de matière a une énergie oscillatoire sont des moyens d'émission de sons (9, 14; 35, 43, 44), caractérisé en ce que lesdits moyens d'émissions de sons sont montés au-dessus de la couche (2) de laine minérale en plusieurs emplacements le long des moyens (4) destinés à faire avancer le couche de laine minérale.

13. Appareil selon la revendication 12, caractérisé en ce que les moyens collecteurs (7, 12; 36, 45) sont montés au-dessous de la couche (2) de laine minérale pour collecter les particules ayant été sorties à force de la couche de laine minérale.

14. Appareil selon la revendication 13, caractérisé en ce que les moyens collecteurs (45) sont raccordés à des moyens d'aspiration destinés à établir une dépression dans lesdits moyens collecteurs.

15. Appareil selon l'une quelconque des revendications 8—14, caractérisé en ce qu'il comporte des moyens (par exemple 17—21) destinés à appliquer des particules sur la surface de la couche de laine minérale.

16. Appareil selon la revendication 15, caractérisé en ce qu'il est réalisé à la fois pour expulser des particules présentes de la couche de laine minérale et, en même temps, pour introduire et distribuer depuis l'extérieur d'autres particules à l'intérieur de la couche de laine minérale.

17. Appareil selon la revendication 16, caractérisé en ce qu'il comporte des moyens destinés à expulser des particules présentes dans la couche de matière, à un premier étage, puis à introduire et distribuer d'autres particules dans la couche de matière dans un second étage.

## Fig. 1

Fig. 2

Thickness of mineral layer

A

B

Amount of loose particles

Fig. 3

Thickness of mineral layer

a

b

c

Amount of added powder

Fig. 4

Thickness of mineral layer

f

e

h

g

Amount of added powder

Fig. 5

41

32  31  35  40  38 42  43  44  32
30      39                     34
34                          L  L
33      36                     45
37                    47  46   48
34            46  34
34
34